# EUROPÄISCHE PATENTSCHRIFT

(11) **EP 1 068 525 B1**
(45) Veröffentlichungstag und Bekanntmachung des Hinweises auf die Patenterteilung: **31.07.2002**
(21) Anmeldenummer: 99915688.8
(22) Anmeldetag: 23.03.1999
(51) Int. Cl.: G01N 33/18

(54) **AUTOMATISCHE KONTROLLE UND STEUERUNG DES TENSIDGEHALTS IN WÄSSRIGEN PROZESSLÖSUNGEN**
METHOD FOR AUTOMATICALLY TESTING AND CONTROLLING SURFACE-ACTIVE CONTENTS IN AQUEOUS SOLUTIONS USED IN A PROCESS
PROCEDE POUR CONTROLER ET REGULER AUTOMATIQUEMENT LA TENEUR EN TENSIOACTIFS DE SOLUTIONS AQUEUSES UTILISEES DANS UN PROCESSUS

(30) Priorität: 01.04.1998 DE 19814500
(43) Veröffentlichungstag der Anmeldung: 17.01.2001
(73) Patentinhaber: Henkel Kommanditgesellschaft auf Aktien, 40589 Düsseldorf-Holthausen (DE)
(72) Erfinder: OPITZ, Werner, D-40764 Langenfeld (DE); KLING, Hans-Willi, D-42277 Wuppertal (DE); BARTIK-HIMMLER, Ibolya, D-51519 Odenthal (DE); BÜTFERING, Ludger, D-50935 Köln (DE); SIEPMANN, Friedhelm, D-45136 Essen (DE); SCHENZLE, Bernd, D-40699 Erkath (DE); KREY, Wolfgang, D-42113 Wuppertal (DE)
(86) Internationale Anmeldenummer: EP9901939
(87) Internationale Veröffentlichungsnummer: WO9951981

(56) Entgegenhaltungen:
- EP-A- 0 750 189
- WO-A-95/18368
- DE-A- 19 538 932

## Beschreibung

Die Erfindung betrifft ein Verfahren zur automatischen Kontrolle und Steuerung von wäßrigen Prozeßlösungen, die nichtionische, anionische und/oder kationische Tenside enthalten. Beispiele derartiger Prozeßlösungen sind Waschlaugen für die großtechnische Wäsche von Textilien, Reinigungsbäder fiir harte Oberflächen sowie tensidhaltige Eisenphosphatierlösungen. Das Verfahren ist insbesondere für technische Prozeßlösungen in der metallverarbeitenden Industrie wie beispielsweise dem Automobilbau konzipiert. Es ermöglicht, die durch den Parameter "Tensidgehalt" charakterisierte Funktionsfähigkeit der Prozeßlösung automatisch zu überwachen und erforderlichenfalls automatisch oder durch externe Anforderung die Prozeßlösung zu ergänzen oder sonstige Badpflegemaßnahmen einzuleiten. Das Verfahren ist insbesondere so konzipiert, daß die Ergebnisse der Tensidbestimmungen an einen von der Prozeßlösung entfernten Ort übermittelt werden. Außerdem kann von einem von der Prozeßlösung entfernten Ort aus in den automatischen Meßablauf eingegriffen werden oder die Nachdosierung oder sonstige Badpflegemaßnahmen angestoßen werden. Der "von der Prozeßlösung entfernten Ort" kann beispielsweise in einem übergeordneten Prozeßleitsystem, in einer Leitzentrale des Werkes, in dem sich die Prozeßlösung befindet, oder auch an einer Stelle außerhalb des Werkes liegen.

Die Reinigung von Metallteilen vor ihrer Weiterverarbeitung stellt eine Standardaufgabe in der metallverarbeitenden Industrie dar. Die Metallteile können beispielsweise mit Pigmentschmutz, Staub, Metallabrieb, Korrosionsschutzölen, Kühlschmierstoffen oder Umformhilfsmitteln verschmutzt sein. Vor der Weiterverarbeitung wie insbesondere vor einer Korrosionsschutzbehandlung (z.B. Phosphatierung, Chromatierung, Anodisierung, Reaktion mit komplexen Fluoriden usw.) oder vor einer Lackierung müssen diese Verunreinigungen durch eine geeignete Reinigerlösung entfernt werden. Hierfür kommen Spritz-, Tauch- oder kombinierte Verfahren in Frage. Setzt man zur Reinigung tensidhaltige wäßrige Prozeßlösungen ein, die zusätzlich Phosphorsäure enthalten, so führt man neben der Reinigung gleichzeitig eine sogenannte nichtschichtbildende Phosphatierung durch. Die gereinigten Metallteile werden hierbei gleichzeitig mit einer korrosionsschützenden amorphen Phosphat- und/oder Oxidschicht überzogen. Derartige Verfahren sind als kombinierte Reinigungs- und Korrosionsschutzverfahren in der metallverarbeitenden Industrie weit verbreitet. Bei der Anwendung auf eisenhaltige Werkstoffe werden sie kurz als "Eisenphosphatierung" bezeichnet.

Nichtphosphatierende industrielle Reiniger in der metallverarbeitenden Industrie sind in der Regel alkalisch (pH-Werte im Bereich von etwa 7 und darüber, beispielsweise 9 bis 12). Grundbestandteile sind Alkalien (Alkalimetallhydroxide, -carbonate, -silicate, -phosphate, -borate) sowie im erfindungsgemäßen Verfahren nichtionische, anionische und/oder kationische Tenside. Häufig enthalten die Reiniger als zusätzliche Hilfskomponenten Komplexbildner (Gluconate, Polyphosphate, Salze von Aminocarbonsäuren wie beispielsweise Ethylendiamintetraacetat oder Nitrilotriacetat, Salze von Phosphonsäuren wie beispielsweise Salze von Hydroxyethandiphosphonsäure, Phosphonobutantricarbonsäure, oder andere Phosphon- oder Phosphonocarbonsäuren), Korrosionsschutzmittel wie beispielsweise Salze von Carbonsäuren mit 6 bis 12 C-Atomen, Alkanolamine und Schauminhibitoren wie beispielsweise endgruppenverschlossene Alkoxylate von Alkoholen mit 6 bis 16 C-Atomen im Alkylrest. Sofern die Reinigerbäder keine anionischen Tenside enthalten, können kationische Tenside eingesetzt werden. Dabei können die Reiniger sowohl nichtionische als auch ionische Tenside enthalten.

Als nichtionische Tenside enthalten die Reiniger in der Regel Ethoxylate, Propoxylate und/oder Ethoxylate/Propoxylate von Alkoholen oder Alkylaminen mit 6 bis 16 C-Atomen im Alkylrest, die auch endgruppenverschlossen sein können. Als anionische Tenside sind Alkylsulfate, Fettalkoholethersulfate und Alkylsulfonate weit verbreitet. Auch Alkylbenzolsulfonate sind noch anzutreffen, aus Umweltgesichtspunkten jedoch nachteilig. Als kationische Tenside kommen insbesondere kationische Alkylammoniumverbindungen mit mindestens einem Alkylrest mit 8 oder mehr C-Atomen in Frage.

Im Stand der Technik ist es bekannt, die nichtionischen Tenside in wäßrigen Prozeßlösungen wie beispielsweise in Reinigerbädern manuell mit Hilfe eines Farbindikators zu bestimmen. Üblicherweise geht man hierbei so vor, daß man einer der Prozeßlösung entnommenen Probe ein Reagenz zusetzt, das mit nichtionischen Tensiden einen Farbkomplex bildet. Vorzugsweise extrahiert man diesen Farbkomplex in ein mit Wasser nicht in jedem Verhältnis mischbares organisches Lösungsmittel und bestimmt anschließend photometrisch dessen Lichtabsorption bei einer bestimmten Wellenlänge. Als Reagenz zur Bildung des Farbkomplexes kann beispielsweise Tetrabromophenolphthaleinethylester verwendet werden. Vor der Extraktion in ein organisches Lösungsmittel, vorzugsweise in einen chlorierten Kohlenwasserstoff, versetzt man hierbei die Prozeßlösung mit einem Puffersystem für den pH-Bereich 7.

Weiterhin ist es bekannt, nichtionische Tenside in Gegenwart von ionischen Tensiden zu bestimmen. Hierbei trennt man die ionischen Tenside durch Ionenaustauscher aus der Probe ab. Die im Ionenaustauscher nicht gebundenen nichtionischen Tenside werden anhand des Brechungsindexes der die Austauschersäule verlassenden Lösung bestimmt.

Anionische und kationische Tenside in wäßrigen Lösungen können beispielsweise durch Titration mit Hyamin^{R}1622 (= N-Benzyl-N,N-dimethyl-N-4(1.1.3.3.tetramethyl-butyl)-phenoxy-ethoxyethylammoniumchlorid) und potentiometrischer Endpunktbestimmung detektiert werden. Hierfür versetzt man die Probe mit einer bekannten Menge an Na-Dodecylsulfat, titriert mit Hyamin und bestimmt den Endpunkt der Titration mit einer ionensensitiven Elektrode.

Alternativ hierzu lassen sich anionische Tenside auch durch Titration mit 1,3-Didecyl-2-methylimidazoliumchlorid bestimmen. Als Detektor setzt man eine Elektrode mit einer ionensensitiven Membran ein. Das Elektrodenpotential hängt von der Konzentration der Meßionen in der Lösung ab.

Je nach Ergebnis dieser mit einem personellen Aufwand verbundenen Tensidbestimmung ergänzt das Bedienungspersonal der Anlage die Prozeßlösung mit einer oder mehreren Ergänzungskomponenten. Das Verfahren macht es also erforderlich, daß sich zumindest zu den Zeitpunkten der Tensidbestimmung Bedienungspersonal am Ort der Anlage aufhält. Es ist also personalintensiv, insbesondere im Mehrschichtbetrieb. Eine Dokumentation der Ergebnisse zur Qualitätskontrolle und Qualitätssicherung erfordert einen zusätzlichen Aufwand.

Die Erfindung stellt sich demgegenüber die Aufgabe, die Kontrolle von Prozeßlösungen durch Tensidbestimmung derart zu automatisieren und zu dokumentieren, daß zumindest die Ergebnisse der Tensidbestimmung auf einem Datenträger gespeichert und/oder ausgegeben werden. Vorzugsweise soll sich die eingesetzte Meßeinrichtung selbst überprüfen und kalibrieren und bei Fehlfunktion eine Alarmmeldung an eine entfernte Stelle übermitteln. Weiterhin soll es vorzugsweise möglich sein, die Funktionsfähigkeit der Meßeinrichtung und die Meßergebnisse von einer entfernten Stelle aus zu überprüfen. Weiterhin soll von einer entfernten Stelle aus in den Meßablauf und in die Pflegemaßnahmen der Prozeßlösungen eingegriffen werden können. Durch die angestrebte Femkontrolle soll der personelle Aufwand für die Kontrolle und die Steuerung der Prozeßlösungen verringert werden.

In der EP-A-0 750 189 wird ein Verfahren zum Nachweis amphiphiler Stoffe in wäßrigen Medien mit Hilfe einer Quarzkristall-Microbalance-Sensorzelle beschrieben. Hierbei verdrängen die amphiphilen Stoffe die Wasserschicht der wäßrigen Matrix auf der Oberfläche eines metallkontaktierten Schwingquarzes und erzeugt so über die konzentrationsabhängige Masseänderung durch eine Frequenzänderung des Schwingquarzes ein Sensorsignal. Dieses Verfahren dient zur Routine-Tensidanalyse sowohl in der off line-Laboranalytik als auch als on line-Meßgerät für in situ-Messungen in Abwasserkanälen oder biologischen Kläranlagen.

Die DE-A-195 38 932 offenbart die Verwendung eines faseroptischen Sensors, der auf dem Effekt der abgeschwächten Totalreflexion beruht, zum Nachweis von Tensiden in Flüssigkeiten. In den Sensor, der sich in der zu untersuchenden Flüssigkeit befindet, wird UV-Licht eingestrahlt. Das aus dem Sensor austretende Licht weist bei Anwesenheit von UV-absorbierenden Tensiden charakteristische Änderungen auf, die eine schnelle und kontinuierliche Detektion der Tenside in der Flüssigkeit erlauben.

Demgegenüber betrifft die vorliegende Erfindung ein Verfahren zur automatischen Kontrolle und Steuerung des Gehalts einer wäßrigen Reinigerlösung an Tensiden, wobei man programmgesteuert
a) aus der wäßrigen Reinigerlösung eine Probe mit einem vorgegebenen Volumen zieht,
b) erwünschtenfalls die Probe von Feststoffen befreit,
c) erwünschtenfalls die Probe in einem vorgegebenen oder als Ergebnis einer Vorbestimmung ermittelten Verhältnis mit Wasser verdünnt,
d) den Gehalt an Tensiden durch selektive Adsorption, elektrochemisch, chromatographisch, durch Spaltung in flüchtige Verbindungen, Ausstrippen dieser flüchtigen Verbingungen und deren Detektion, oder durch Zugabe eines Reagenzes, das die Wechselwirkung der Probe mit elektromagnetischer Strahlung proportional zum Gehalt an Tensiden ändert, und Messung der Änderung dieser Wechselwirkung bestimmt,
e) das Ergebnis der Bestimmung auf einem Datenträger speichert und/oder als Basis für weitere Berechnungen heranzieht und/oder das Ergebnis der Bestimmung oder der weiteren Berechnungen an einen Ort überträgt, der sich nicht im optischen Kontakt mit der Reinigerlösung befindet, und bei Unterschreiten eines vorgegebenen Mindestwertes des Gehaltes an nichtionischen, anionischen oder kationischen Tensiden eine Einrichtung aktiviert, die eine oder mehrere Ergänzungskomponenten in die Reinigerlösung dosiert,
f) nach einem vorgegebenen Zeitintervall oder nach einer vorgegebenen Anzahl von Bestimmungen oder aufgrund einer externen Anforderung oder dann, wenn die Ergebnisse zweier aufeinanderfolgender Bestimmung um einen vorgegebenen Betrag differieren, durch Kontrollmessung einer oder mehrerer Standardlösungen die Funktionsfähigkeit der verwendeten Meßeinrichtung überprüft und
g) je nach Ergebnis der Überprüfung der verwendeten Meßeinrichtung mit der automatischen Bestimmung des Gehaltes an Tensiden fortfährt und/oder eine oder mehrere der folgenden Aktionen durchführt: Analyse festgestellter Abweichungen, Korrektur der Meßeinrichtung, Beenden der Bestimmungen des Gehaltes an Tensiden, Senden einer Statusmeldung oder eines Alarmsignals an ein übergeordnetes Prozeßleitsystem oder an eine Überwachungseinrichtung.

Als wäßrige Prozeßlösung kommt hierbei insbesondere eine Reinigungslösung für harte Oberflächen, insbesondere für Metalloberflächen, oder eine Eisenphosphatierlösung in Betracht. Derartige Prozeßlösungen sind im Stand der Technik vielfältig bekannt und werden verbreitet in der metallverarbeitenden Industrie eingesetzt.

Das im Teilschritt a) gezogene Probenvolumen kann dem Steuerteil der fiir das Verfahren einzusetzenden Meßeinrichtung fest einprogrammiert sein. Vorzugsweise ist die Größe des Probenvolumens von einem entfernten Ort aus änderbar. Weiterhin kann das Steuerprogramm so ausgelegt sein, daß es das zu verwendende Probevolumen von dem Ergebnis einer vorausgehenden Messung abhängig macht.

Beispielsweise kann das Probenvolumen um so größer gewählt werden, je geringer der Tensidgehalt der Prozeßlösung ist. Die Genauigkeit der Tensidbestimmung kann hierdurch optimiert werden.

Wenn im Sinne des erfindungsgemäßen Verfahrens von einem "entfernten Ort" die Rede ist, so ist damit ein Ort gemeint, der sich nicht im unmittelbaren oder zumindest im optischen Kontakt mit der Prozeßlösung befindet. Der entfernte Ort kann beispielsweise ein zentrales Prozeßleitsystem darstellen, das im Rahmen eines Gesamtverfahrens zur Oberflächenbehandlung der Metallteile als Teilaufgabe ein Reinigerbad kontrolliert und steuert. Der "entfernte Ort" kann auch eine zentrale Leitwarte darstellen, von der aus der Gesamtprozeß kontrolliert und gesteuert wird und die sich beispielsweise in einem anderen Raum als die Prozeßlösung befindet. Als "entfernter Ort" kommt jedoch auch eine Stelle außerhalb des Werkes in Betracht, in dem sich die Prozeßlösung befindet. Hierdurch wird es möglich, daß Spezialisten die Prozeßlösung überprüfen und steuern, die sich außerhalb des Werkes aufhalten, in dem sich diese befindet. Hierdurch ist es wesentlich seltener erforderlich, daß sich Spezialpersonal am Ort der Prozeßlösung aufhält.

Geeignete Datenleitungen, mit denen sich die Ergebnisse der Tensidbestimmungen sowie Steuerbefehle übertragen lassen, stehen im Stand der Technik zur Verfügung.

Zwischen dem Ziehen der Probe und der eigentlichen Messung kann es wünschenswert sein, die Probe im fakultativen Teilschritt b) von Feststoffen zu befreien. Bei einer nur wenig mit Feststoffen belasteten Prozeßlösung ist dieses nicht erforderlich. Bei einem zu hohen Feststoffgehalt können jedoch Ventile der Meßeinrichtung verstopfen und Sensoren verschmutzen. Daher ist es empfehlenswert, Feststoffe aus der Probe zu entfernen. Dies kann automatisch durch Filtration oder auch durch Verwendung eines Zyklons oder einer Zentrifuge erfolgen.

Im Teilschritt c) wird die Probe erwünschtenfalls in einem vorgegebenen oder als Ergebnis einer Vorbestimmung ermittelten Verhältnis mit Wasser verdünnt. Im Teilschritt d) wird der Gehalt an Tensiden nach unterschiedlichen Methoden bestimmt, die weiter unten näher erläutert werden.

Das Ergebnis der Bestimmung kann anschließend im Teilschritt e) auf einem Datenträger gespeichert werden. Zusätzlich oder alternativ hierzu kann es als Basis für weitere Berechnungen herangezogen werden. Weiterhin kann das Ergebnis der Bestimmung oder das Ergebnis der weiteren Berechnungen an einen entfernten Ort übertragen und dort erneut auf einem Datenträger gespeichert und/oder ausgegeben werden. Unter "Ausgabe des Ergebnisses der Bestimmung" wird verstanden, daß dieses entweder an ein übergeordnetes Prozeßleitsystem weitergegeben oder für einen Menschen erkennbar auf einem Bildschirm angezeigt oder ausgedruckt wird. Dabei kann der Ort der Anzeige bzw. Ausgabe des Ergebnisses der weiter oben definierte "entfernte Ort" sein. Es ist vorzuziehen, daß die Ergebnisse der einzelnen Bestimmungen zumindest für einen vorgegebenen Zeitintervall auf einem Datenträger gespeichert werden, so daß sie anschließend, beispielsweise im Sinne einer Qualitätssicherung, ausgewertet werden können. Die Ergebnisse der Tensidbestimmungen müssen jedoch nicht unmittelbar als solche ausgegeben oder auf Datenträger gespeichert werden. Vielmehr können sie auch direkt als Basis für weitere Berechnungen herangezogen werden, wobei die Ergebnisse dieser weiteren Berechnungen angezeigt oder gespeichert werden. Beispielsweise kann anstelle des jeweils aktuellen Tensidgehaltes der Trend der Tensidkonzentration und/oder deren relative Änderung angezeigt werden. Oder die aktuellen Tensidgehalte werden in "% des Sollgehalts" umgewandelt.

Im einfachsten Falle arbeitet das erfindungsgemäße Verfahren so, daß die Teilschritte a) bis e) nach einem vorgegebenen Zeitintervall wiederholt werden. Das vorgegebene Zeitintervall richtet sich dabei nach den Anforderungen des Betreibers der Prozeßlösung und kann jedes beliebige Zeitintervall im Bereich von wenigen Minuten bis zu mehreren Tagen umfassen. Für eine Qualitätssicherung ist es vorzuziehen, daß die vorgegebenen Zeitintervalle beispielsweise im Bereich zwischen 5 Minuten und 2 Stunden liegen. Beispielsweise kann man alle 15 Minuten eine Messung durchführen.

Das erfindungsgemäße Verfahren kann jedoch auch so durchgeführt werden, daß man die Schritte a) bis e) nach um so kürzeren Zeitintervallen wiederholt, je stärker sich die Ergebnisse zweier aufeinander folgender Bestimmungen unterscheiden. Das Steuersystem für das erfindungsgemäße Verfahren kann also selbst entscheiden, ob die Zeitintervalle zwischen den einzelnen Bestimmungen verkürzt oder verlängert werden sollen. Selbstverständlich muß dem Steuersystem die Anweisung vorgegeben werden, bei welchen Differenzen zwischen den Ergebnissen aufeinander folgender Bestimmungen welche Zeitintervalle gewählt werden sollen.

Weiterhin kann das erfindungsgemäße Verfahren so durchgeführt werden, daß die Teilschritte a) bis e) zu jedem beliebigen Zeitpunkt aufgrund einer externen Anforderung ausgeführt werden. Hierdurch kann beispielsweise eine sofortige Kontrolle des Tensidgehalts der Prozeßlösung vorgenommen werden, wenn in nachfolgenden Prozeßschritten Qualitätsprobleme festgestellt werden. Die Messung des Tensidgehaltes kann also zeitgesteuert (nach festen Zeitintervallen) oder ereignisgesteuert (bei festgestellten Änderungen oder durch äußere Anforderungen) erfolgen.

Das erfindungsgemäße Verfahren wird so durchgeführt, daß sich die verwendete Meßeinrichtung selbst kontrolliert und erforderlichenfalls nachkalibriert. Hierzu ist vorgesehen, daß man nach einem vorgegebenen Zeitintervall oder nach einer vorgegebenen Anzahl von Bestimmungen oder aufgrund einer externen Anforderung durch Kontrollmessungen einer oder mehrerer Standardlösungen die Funktionsfähigkeit der verwendeten Meßeinrichtung überprüft. Zur Überprüfung wird eine Standardlösung mit bekanntem Tensidgehalt vermessen. Diese Überprüfung ist am realitätsnächsten, wenn man als Standardlösung eine Standard-Prozeßlösung einsetzt, deren Zusammensetzung der zu überprüfenden Lösung möglichst nahekommt.

Im erfindungsgemäßen Verfahren ist auch vorgesehen, daß man durch Kontrollmessung einer oder mehrerer Standardlösungen die Funktionsfähigkeit der verwendeten Meßeinrichtung überprüft, wenn die Ergebnisse zweier aufeinander folgender Messungen um einen vorgegebenen Betrag differieren. Hierdurch kann unterschieden werden, ob festgestellte Abweichungen im Tensidgehalt der Prozeßlösung real sind und Badpflegemaßnahmen erfordern oder ob sie durch einen Fehler im Meßsystem vorgetäuscht werden.

Je nach Ergebnis der Überprüfung der verwendeten Meßeinrichtung kann man die zwischen der aktuellen und der vorhergehenden Kontrollmessung erfolgten Bestimmungen des Tensidgehaltes mit einem Statuskennzeichen versehen, das die Zuverlässigkeit dieser Bestimmungen kennzeichnet. Haben beispielsweise aufeinander folgende Kontrollmessungen zur Uberprüßng der verwendeten Meßeinrichtung ergeben, daß diese korrekt arbeitet, können die Bestimmungen des Tensidgehaltes mit einem Statuskennzeichen "in Ordnung" versehen werden. Differieren die Ergebnisse der Kontrollmessungen um einen vorgegebenen Mindestbetrag, können beispielsweise die zwischenzeitlich erfolgten Bestimmungen des Tensidgehaltes mit dem Statuskennzeichen "zweifelhaft" versehen werden.

Weiterhin ist vorgesehen, daß man je nach Ergebnis der Überprüfung der verwendeten Meßeinrichtung mit der automatischen Bestimmung des Tensidgehaltes fortfährt und/oder eine oder mehrere der folgenden Aktionen durchführt: Analyse festgestellter Abweichungen, Korrektur der Meßeinrichtung, Beenden der Bestimmung des Tensidgehaltes, Senden einer Statusmeldung oder eines Alarmsignals an ein übergeordnetes Prozeßleitsystem oder eine Überwachungseinrichtung, also an einen entfernten Ort. Die Meßeinrichtung kann also nach vorgegebenen Kriterien selbst entscheiden, ob sie soweit funktionsfähig ist, daß mit den Bestimmungen des Tensidgehaltes fortgefahren werden kann, oder ob Abweichungen festgestellt werden, die ein manuelles Eingreifen erforderlich machen.

Das Verfahren kann dabei so ausgelegt sein, daß es sich bei den Tensiden, deren Gehalt in der Prozeßlösung bestimmt werden soll, um nichtionische Tenside handelt. Zu deren Bestimmung kann man so vorgehen, daß man im Teilschritt d) ein Reagenz zugibt, das die Wechselwirkung der Probe mit elektromagnetischer Strahlung proportional zum Gehalt an nichtionischen Tensiden ändert, und die Änderung dieser Wechselwirkung mißt.

Beispielsweise kann es sich bei dem Reagenz um einen Komplex zweier Substanzen A und B handeln, wobei die nichtionischen Tenside die Substanz B aus dem Komplex mit der Substanz A verdrängt und sich hierbei Farbe oder Fluoreszenzeigenschaften der Substanz B ändern. Beispielsweise kann es sich bei der Substanz B um einen fluoreszierenden Stoff oder um einen Farbstoff handeln, der einen Komplex mit beispielsweise Dextranen oder Stärke als Beispiel einer Substanz A eingehen kann. Als Komponente des Komplexes hat die Substanz B bestimmte Farb- oder Fluoreszenzeigenschaften. Wird sie aus dem Komplex verdrängt, ändern sich diese Eigenschaften. Durch Messung der Lichtabsorption oder der Fluoreszenzstrahlung kann dann detektiert werden, welcher Anteil der Substanz B nicht in Form eines Komplexes mit A vorliegt. Dabei wählt man die Substanz A derart, daß bei Zugabe nichtionischer Tenside die Substanz B aus dem Komplex verdrängt und statt dessen ein Komplex mit den nichtionischen Tensiden gebildet wird. Dann ist die Menge der aus dem Komplex mit A verdrängten Substanz B proportional zur zugesetzten Menge an nichtionischen Tensiden. Aus der durch die freigesetzte Menge B bewirkten Änderung der Lichtabsorption oder der Fluoreszenz kann auf die Menge an zugesetzten Niotensiden zurückgeschlossen werden.

Beispielsweise kann als Reagenz ein Salz eines kationischen Farbstoffs mit Tetraphenylboratanionen eingesetzt werden. Nichtionische Tenside können den Farbstoff aus diesem Salz verdrängen, nachdem man sie durch Zugabe von Bariumionen in einen kationischen Komplex mit Barium umgewandelt hat. Diese Methode, nichtionische Tenside in kationisch geladene Komplexe zu überführen und hierdurch Reaktionen zugänglich zu machen, die auf Kationen ansprechen, wird in der Literatur auch als "Aktivierung" der nichtionischen Tenside bezeichnet. Das Verfahren ist beispielsweise beschrieben in Vytras K. Dvorakova V und Zeeman I (1989) Analyst 114, Seite 1435 ff. Die Menge des aus dem Reagenz freigesetzten kationischen Farbstoffs ist proportional der Menge vorhandener nichtionischer Tenside. Ändert sich das Absorptionsspektrum des Farbstoffs bei dieser Freisetzung, kann die freigesetzte Farbstoffmenge durch photometrische Vermessung einer geeigneten Absorptionsbande bestimmt werden.

Diese Bestimmungsmethode läßt sich vereinfachen, wenn man ein Salz eines kationischen Farbstoffs als Reagenz einsetzt, das nur in einem mit Wasser nicht mischbaren organischen Lösungsmittel löslich ist, während der freigesetzte Farbstoff selbst wasserlöslich ist und zu einer Färbung der Wasserphase führt. Selbstverständlich ist auch das umgekehrte Vorgehen geeignet: Man setzt ein wasserlösliches Salz eines organischen Farbstoffs ein, wobei der freigesetzte Farbstoff nur in einer organischen Phase löslich ist. Durch Freisetzen des Farbstoffs im Austausch zu den nichtionischen Tensiden und Extraktion des freigesetzten Farbstoffs in die jeweils andere Phase läßt er sich in dieser auf einfachem Wege photometrisch bestimmen.

Dieses Bestimmungsverfahren ist auch fiir die Bestimmung kationischer Tenside geeignet. Da diese von sich aus bereits positiv geladen sind, erübrigt sich die vorstehend beschriebene "Aktivierung" mit Barium-Kationen.

Weiterhin kann es sich bei dem Reagenz um eine Substanz handeln, die mit den anionischen Tensiden selbst einen Komplex bildet, der andere Farb- oder Fluoreszenzeigenschaften aufweist als das freie Reagenz. Beispielsweise kann das Reagenz im optischen Gebiet farblos sein, während sein Komplex mit nichtionischen Tensiden elektromagnetische Schwingungen im optischen Bereich absorbiert, also eine Farbe aufweist. Oder das Maximum der Lichtabsorption, also die Farbe, des ungebundenen Reagenzes unterscheidet sich von derjenigen des Komplexes mit den nichtionischen Tensiden. Das Reagenz kann jedoch auch bestimmte Fluoreszenzeigenschaften zeigen, die sich bei der Komplexbildung mit den nichtionischen Tensiden ändern. Beispielsweise kann das freie Reagenz fluoreszieren, während die Komplexbildung mit den nichtionischen Tensiden die Fluoreszenz löscht. In allen Fällen kann durch Messen der Lichtabsorption bei einer vorzugebenden Wellenlänge oder der Fluoreszenzstrahlung die Konzentration des Komplexes aus Reagenz und nichtionischen Tensiden und damit die Konzentration der nichtionischen Tenside selbst bestimmt werden.

Vorzugsweise wird im Teilschritt d) ein Reagenz zugegeben, das mit den nichtionischen Tensiden einen Komplex bildet, der in ein nicht in jedem Verhältnis mit Wasser mischbares organisches Lösungsmittel extrahiert werden kann. Anschließend führt man eine Extraktion des Komplexes aus nichtionischen Tensiden und zugegebenem Reagenz in das mit Wasser nicht in jedem Verhältnis mischbare organische Lösungsmittel durch. Dies kann durch intensives Vermischen der beiden Phasen, beispielsweise durch Schütteln oder vorzugsweise durch Rühren geschehen. Nach diesem Extraktionsschritt beendet man das Vermischen der beiden Phasen, so daß eine Phasentrennung in eine wäßrige und eine organische Phase eintritt. Erwünschtenfalls kann die Vollständigkeit der Phasentrennung durch geeignete Methoden wie beispielsweise Bestimmung der elektrischen Leitfähigkeit oder Messung der Trübung durch Lichtabsorption oder -streuung kontrolliert werden.

Hierauf folgt die eigentliche Messung des Gehalts an nichtionischen Tensiden. Hierzu setzt man die organische Phase, die den Komplex aus nichtionischen Tensiden und zugegebenem Reagenz enthält, einer elektromagnetischen Strahlung aus, die mit dem in der organischen Phase gelösten Komplex in Wechselwirkung treten kann. Beispielsweise kann als elektromagnetische Strahlung sichtbare oder ultraviolette Strahlung eingesetzt werden, deren Absorption durch den Komplex aus nichtionischen Tensiden und zugesetztem Reagenz bestimmt wird. Denkbar ist jedoch auch beispielsweise, daß man ein Reagenz einsetzt, dessen Komplex mit den nichtionischen Tensiden bei Kernresonanz- oder Elektronenspinresonanz-Messungen ein charakteristisches Signal liefert. Die Signalstärke, ausgedrückt als Schwächung einer elektromagnetischen Schwingung im entsprechenden Frequenzband (Absorption), kann mit der Konzentration des Komplexes korreliert werden. Anstelle von Absorptionseffekten können auch Emissionseffekte zur Konzentrationsbestimmung herangezogen werden. Beispielsweise kann ein Reagenz gewählt werden, dessen Komplex mit nichtionischen Tensiden in dem organischen Lösungsmittel elektromagnetische Strahlung einer bestimmten Wellenlänge absorbiert und dafür elektromagnetische Strahlung einer größeren Wellenlänge emitiert, deren Intensität gemessen wird. Ein Beispiel hierfür ist die Messung der Fluoreszenzstrahlung beim Bestrahlen der Probe mit sichtbarem oder ultraviolettem Licht.

Prinzipiell kann die Mischung der Wechselwirkung der organischen Phase mit elektromagnetischer Strahlung unmittelbar nach Abschluß der Phasentrennung in dem selben Gefäß erfolgen, in dem die Phasentrennung durchgeführt wird. Je nach verwendeter Meßmethode zur Bestimmung der Wechselwirkung der oganischen Phase mit elektromagnetischer Strahlung ist es jedoch vorzuziehen, die organische Phase oder einen Teil hiervon abzuziehen und über eine Leitung der eigentlichen Meßeinrichtung zuzuführen. Hierdurch ist es insbesondere möglich, für die Messung geeignete Küvetten vorzusehen. Demgemäß besteht eine bevorzugte Ausführungsform der Erfindung darin, daß man nach dem Teilschritt f) die organische Phase von der wäßrigen Phase abtrennt und der Meßeinrichtung zuführt. Für dieses Abtrennen der organischen Phase ist es besonders empfehlenswert, wenn das nicht in jedem Verhältnis mit Wasser mischbare organische Lösungsmittel ein halogenhaltiges Lösungsmittel mit einer Dichte höher als Wasser darstellt. Nach Durchführung der Phasentrennung befindet sich die organische Phase dann im unteren Teil des Gefäßes und kann nach unten abgezogen werden.

Als halogenhaltiges Lösungsmittel kommen beispielsweise Dichlormethan oder höhersiedende Halogenkohlenwasserstoffe, insbesondere Fluorchlorkohlenwasserstoffe wie beispielsweise Trifluortrichlorethan in Betracht. Diese Lösungsmittel müssen nach Gebrauch entsprechend den lokalen gesetzlichen Bestimmungen entsorgt werden. Da dies kostenträchtig sein kann, bietet es sich an, das gebrauchte Lösungsmittel beispielsweise durch Behandeln mit Aktivkohle und/oder durch Destillation wieder aufzubereiten und erneut fiir das Meßverfahren einzusetzen.

In einer bevorzugten Ausführungsform der Erfindung gibt man als Reagenz ein Mittel zu, das in der organischen Phase mit dem nichtionischen Tensid eine Farbreaktion eingeht. Als Wechselwirkung der organischen Phase mit elektromagnetischer Strahlung kann dann die Lichtabsorption bei einer vorgegebenen Wellenlänge gemessen werden. Hierfür ist ein konventionelles Fotometer geeignet. Beispielsweise kann man als Farbreagenz Tetrabromophenolphthaleinethylester verwenden. In diesem Fall muß die Probe der wäßrigen Prozeßlösung mit einem Puffersystem für einen pH-Wert im Bereich von 7 versetzt werden. Ein solches Puffersystem kann beispielsweise eine wäßrige Lösung von Dihydrogenphosphaten und Hydrogenphosphaten darstellen. Dabei geht man vorzugsweise so vor, daß die Menge der Pufferlösung wesentlich größer ist als die Probenmenge der tensidhaltigen Prozeßlösung.

Bei der Verwendung von Tetrabromophenolphthaleinethylester als Farbreagenz führt man die Messung der Lichtabsorption im Teilschritt g) vorzugsweise bei einer Wellenläge von 610 nm durch.

In der bevorzugten Ausführungsform der Verwendung von 3,3,5,5-Tetrabromphenolphthaleinethylester als Farbreagenz kann die Bestimmung des Gehaltes an nichtionischen Tensiden folgendermaßen erfolgen:
Man bereitet eine Indikatorlösung, die 100 mg 3,3,5,5-Tetrabromphenolphthaleinethylester in 100 ml Ethanol enthält. Weiterhin bereitet man eine Pufferlösung, indem man 200 ml einer käuflichen Pufferlösung für den pH-Wert 7 (Kaliumdihydrogenphosphat/Dinatriumhydrogenphosphat) und 500 ml einer dreimolaren Kaliumchloridlösung mit 1 000 ml Wasser vermischt.

Zur Durchführung der Bestimmung legt man in einem geeigneten Gefäß 18 ml der Pufferlösung vor. Hierzu werden 2 ml Indikatorlösung gegeben. Hierzu gibt man 50 µl der Probelösung. Man rührt die vereinigten Lösungen für etwa 3 Minuten und gibt anschließend 20 ml Dichlormethan zu. Danach wird das Gefäß für etwa 1 Minute kräftig durchmischt. Danach wartet man die Phasentrennung ab, was beispielsweise 20 Minuten erfordern kann. Danach wird die organische Phase entnommen und in einem Fotometer bei einer Wellenlänge von 610 nm vermessen. Als Analysenküvette ist beispielsweise eine 10-mm-Küvette geeignet. Der Tensidgehalt der Probelösung wird anhand einer Kalibrierkurve ermittelt.

Ist der Tensidgehalt so gering, daß die Bestimmung unsicher wird, kann das Volumen der fiir die Messung verwendeten Probe erhöht werden. Ist der Tensidgehalt so hoch, daß eine Lichtabsorption oberhalb von 0,9 eintritt, ist es empfehlenswert, die Probe vor der Messung zu verdünnen.

Unabhängig von der gewählten Methode muß durch eine vorausgegangene Kalibrierung mit Tensidlösungen bekannter Konzentration eine Korrelation zwischen der Stärke des Meßsignals und der Konzentration der nichtionischen Tenside hergestellt und abgespeichert werden. Bei Messung der Lichtabsorption kann die Kalibrierung auch über geeignete Farbgläser erfolgen. Alternativ zu einer vorausgehenden Kalibrierung kann durch Zugabe von Tensid/Reagenz-Komplex in bekannter Konzentration oder durch multiples Aufstocken und erneute Messung der Wechselwirkung mit elektromagnetischer Strahlung auf den Tensidgehalt der Probe zurückgeschlossen werden.

Als Alternative zu einer Bestimmung der Wechselwirkung eines sich an das nichtionische Tensid bindenden oder von diesem aus einem Komplex verdrängten Reagenz mit elektromagnetischer Strahlung kann man den Gehalt an nichtionischen Tensiden chromatografisch bestimmen. Hierzu entfernt man zunächst vorzugsweise aus der Probe eventuell vorhandene Öle und Fette. Dies kann beispielsweise mit einem Absorptionsmittel erfolgen. Anschließend gibt man die Probe, die ggf. ionische Tenside enthält, auf eine Anionen- und/oder Kationenaustauschersäule, die vorzugsweise nach Art einer Säule für eine Hochdruck-Flüssigkeits-Chromatografie ausgebildet ist. Die Konzentration der nichtionischen Tenside in der von den ionischen Tensiden befreiten Lösung, die die Austauschersäule verläßt, wird vorzugsweise über den Brechungsindex bestimmt. Dabei nimmt man die quantitative Auswertung vorzugsweise nach der Methode des externen Standards vor. Die Messung erfolgt durch einen Vergleich mit reinem Lösungsmittel aus der Vergleichszelle und Lösungsmittel mit zu analysierender Substanz aus der Meßzelle des Detektors. Als Lösungsmittel kommen Wasser oder ein Wasser-Methanol-Gemisch in Frage.

Vor Beginn einer Meßserie muß das HPLC-artige Ionenaustauschersystem kalibriert und die Vergleichszelle des Detektors 20 Minuten lang mit dem Lösungsmittel gespült werden. Zur Kalibrierung verwendet man unterschiedlich konzentrierte Lösungen der zu bestimmenden nichtionischen Tenside. Kalibrierund Probelösungen müssen vor dem Einspritzen in das HPLC-artige System für beispielsweise 5 Minuten in einem Ultraschallbad entgast werden. Das definierte Entgasen ist wegen der Empfindlichkeit der Brechungsindex-Detektion auf unterschiedliche Lösemittelqualitäten wichtig.

Versetzt man die Probelösung vor dem Aufbringen auf die HPLC-artige Ionenaustauschersäule mit Methanol, können unlösliche Salze ausfallen. Diese müssen vor der Aufgabe der Probe in das HPLC-artige System durch einen Mikrofilter abfiltriert werden.

Diese Methode ist für die off-line-Bestimmung unsulfierter Anteile in organischen Sulfaten oder Sulfonaten bekannt (DIN EN 8799).

Weiterhin eignet sich für die Bestimmung der nichtionischen Tenside folgendes Verfahren: Man spaltet die nichtionischen Tenside mit Halogenwasserstoff, vorzugsweise mit Iodwasserstoff, unter Bildung von flüchtigen Alkylhalogeniden, vorzugsweise von Alkyliodiden. Durch Einblasen eines Gasstroms in die Probe strippt man die flüchtigen Alkylhalogenide aus und detektiert sie in einem geeigneten Detektor. Beispielsweise ist hierfür ein "Elektron Capture Detector" geeignet. Dieses Verfahren ist als Labormethode zur Charakterisierung von Fettalkoholethoxylaten bekannt (DGF Einheitsmethode H-III 17 (1994)).

Bei den Tensiden kann es sich auch um anionische Tenside handeln. Deren Gehalt in der Probelösung bestimmt man im Teilschritt d) vorzugsweise elektrochemisch. Hierfür werden die anionischen Tenside mit geeigneten Reagenzien titriert, wobei man die Titration durch die Änderung des elektrischen Potentials einer geeigneten Meßelektrode verfolgt.

Beispielsweise kann man hierbei so vorgehen, daß man den pH-Wert der Probe auf einen Bereich zwischen 3 und 4, vorzugsweise auf etwa 3,5, einstellt, die Probe mit einem Titrationsreagenz in Gegenwart einer ionenempfindlichen Membranelektrode titriert und die Änderung des Elektrodenpotentials mißt. Die Empfindlichkeit dieser Methode kann dadurch gesteigert werden, daß man die Probe mit einem Alkohol mit 1 bis 3 C-Atomen, vorzugsweise mit Methanol, versetzt. Als Titrationsreagenz ist vorzugsweise 1,3-Didecyl-2-methylimidazoliumchlorid geeignet. Als Meßelektrode dient eine ionenempflindliche Membranelektrode, vorzugsweise mit einer PVC-Membran. Eine solche Elektrode ist als "High Sense Elektrode" bekannt. Als Referenzelektrode setzt man vorzugsweise eine Silberelektrode ein. Die Potentialbildung erfolgt durch eine möglichst spezifische Wechselwirkung zwischen dem in der PVC-Membran enthaltenen Ionencarrier und den zu bestimmenden Ionen in der Meßlösung. Diese Wechselwirkung führt in einer Gleichgewichtsreaktion zu einem Übergang der Meßionen aus der Meßlösung in die Membran und damit zur Ausbildung einer elektrischen Potentialdifferenz an der Phasengrenze Meßlösung/Membran. Diese Potentialdifferenz kann gegen eine Referenzelektrode potentiometrisch (stromlos) gemessen werden. Das Ausmaß des Ionenübertritts aus der Meßlösung in die Membran ist konzentrationsabhängig. Der Zusammenhang zwischen der Meßionenkonzentration und dem elektrischen Potential kann theoretisch durch die Nernstsche Gleichung beschrieben werden. Wegen möglicher Störungen ist es jedoch vorzuziehen, den Zusammenhang zwischen Elektrodenpotential und Meßionenkonzentration durch Kalibrierung mit Vergleichslösungen festzustellen.

Außer anionischen Tensiden können in der zu kontrollierenden Prozeßlösung auch kationische Tenside bestimmt werden. Hierfür kann man eine Methode einsetzen, die sich auch zur Bestimmung anionischer Tenside eignet. Auch in diesem Verfahren erfolgt die Bestimmung elektrochemisch: Man gibt zu der Probe eine vorbestimmte Menge an Na-Dodecylsulfat, titriert die Probe mit Hyamin (N-Benzyl-N,N-dimethyl-N-4( 1.1.3.3.-tetramethyl-butyl)-phenoxyethoxyethylammoniumchlorid) und bestimmt den Titrationsendpunkt mit einer auf ionische Tenside sensitiven Elektrode.

Außer den vorstehend genannten Verfahren eignen sich zur Bestimmung der Tenside Prozesse, bei denen man die Tenside auf geeigneten Oberflächen absorbiert und Effekte mißt, die auf die Belegung der Oberflächen mit den Tensiden zurück zu führen sind. Da die Belegung der Oberflächen mit den Tensiden unterhalb der Sättigungsgrenze als proportional zum Tensidgehalt angesetzt werden kann, läßt sich nach geeigneter Kalibrierung aus den Eigenschaftsänderungen der tensidbelegten Oberflächen auf den Tensidgehalt der Probelösung zurückschließen.

Beispielsweise kann man die Tenside an der Oberfläche eines Schwingquarzes absorbieren und die Änderung der Schwingungsfrequenz des Schwingquarzes messen. Ein weiteres Verfahren besteht darin, die Tenside an der - ggf. geeignet vorbehandelten - Oberfläche eines Lichtleiters zu absorbieren. Dies führt zu einer Änderung des Brechungsindexes beim Übertritt von Licht aus dem Lichtleiter in das umgebende Medium, die sich in der Leitfähigkeit des Lichtleiters fiir Licht bemerkbar macht. Je nach Brechungsindex wird das Licht im Lichtleiter unterschiedlich stark geschwächt oder kommt bei Verlust der Totalreflexion am Lichtleiterende überhaupt nicht mehr an. Durch Vergleich der am Ende des Lichtleiters austretenden Lichtintensität mit der am Anfang eingespeisten läßt sich der Belegungsgrad der Lichtleiteroberfläche mit Tensiden und damit der Tensidgehalt im umgebenden Medium bestimmen. Der Zusammenbruch der Totalreflexion tritt bei einem bestimmten Schwellwert des Tensidgehaltes ein, der ebenfalls zur Charakterisierung des Tensidgehaltes der Prozeßlösung herangezogen werden kann.

Das erfindungsgemäße Verfahren ist auf beliebige Prozeßlösungen anwendbar. Besonders konzipiert ist es für Prozeßlösungen in der metallverarbeitenden Industrie wie beispielsweise im Automobilbau. Beispielsweise kann die wäßrige Prozeßlösung eine Reinigerlösung darstellen. Solche Reinigerlösungen werden beispielsweise zur Reinigung von Automobilkarosserien vor der Phosphatierung eingesetzt. Für die Kontrolle und die Steuerung einer derartigen Reinigerlösung kann vorgesehen werden, daß man bei Unterschreiten eines vorgegebenen Mindestwertes des Gehaltes an Tensiden oder auf eine externe Anforderung eine Einrichtung aktiviert, die eine oder mehrere Ergänzungskomponenten in die Reinigerlösung dosiert. Als Ergänzungskomponente kommt beispielsweise eine Ergänzungslösung in Betracht, die alle Wirkstoffe der Reinigerlösung im richtigen Mengenverhältnis enthält. Die Ergänzungslösung kann also außer den kontrollierten Tensiden weitere Wirkstoffe der Reinigerlösung wie beispielsweise weitere Tenside, Buildersubstanzen, Alkalien, Komplexbildner und Korrosionsinhibitoren enthalten. Alternativ hierzu kann die Ergänzungslösung lediglich die Tenside enthalten, während die anderen Wirkstoffe der Reinigerlösung erforderlichenfalls aufgrund getrennter Bestimmungen, zeitgetaktet oder durchsatzgesteuert nachdosiert werden.

Hierbei können die Größe der Zugabeportion selbst oder bei fest vorgegebenen Zugabeportionen die Zeitintervalle zwischen den einzelnen Zugaben variiert werden. Dies kann beispielsweise über Dosierpumpen oder auch gewichtsgesteuert erfolgen. Im erfindungsgemäßen Verfahren ist also zum einen vorgesehen, daß bei bestimmten Abweichungen vom Sollwert (insbesondere, wenn durch die Kontrollmessungen die Funktionsfähigkeit der Meßeinrichtung feststeht) eine bestimmte Menge Ergänzungskomponente in die Prozeßlösung nachdosiert wird. Zum anderen kann dieses Nachdosieren jedoch auch aufgrund einer externen Anforderung, beispielsweise von einem entfernten Ort aus, unabhängig von dem aktuellen Gehalt an Tensiden vorgenommen werden.

In einer weiteren Ausführungsform der Erfindung ergänzt man die Prozeßlösung durchsatzabhängig mit einer vorgegebenen Menge Ergänzungskomponente pro durchgesetzter Einheit. Beispielsweise kann man bei einem Reinigungsbad für Automobilkarossen festlegen, welche Menge Ergänzungskomponente pro gereinigter Karosse zugegeben wird. Die erfindungsgemäße Kontrolle des Tensidgehalts bzw. des Aussetzens der Basisdosierung dient dann dazu, den Erfolg dieser vorgegebenen Zugabe zu kontrollieren und zu dokumentieren sowie durch zusätzliche ergebnisabhängige Feindosierung eine konstantere Betriebsweise des Reinigungsbades zu erreichen. Qualitätsschwankungen werden hierdurch verringert.

Vorzugsweise ist das im erfindungsgemäßen Verfahren eingesetzte Meßsystem so ausgelegt, daß es die Füllstände und/oder den Verbrauch der verwendeten Reagenzien (Farb- oder Fluoreszenzreagenz, Titrierlösung, Standard- und Testlösungen, Lösungsmittel, Pufferlösung evtl. Hilfslösungen) automatisch überwacht und bei Unterschreiten eines vorgegebenen Mindestfüllstandes eine Warnmeldung ausgibt. Hierdurch kann vermieden werden, daß die Meßeinrichtung dadurch funktionsunfähig wird, daß ihr die erforderlichen Chemikalien fehlen. Die Überwachung der Füllstände kann mit bekannten Methoden erfolgen. Beispielsweise können die Gefäße mit den Chemikalien auf einer Waage stehen, die das jeweilige Gewicht der Chemikalien registriert. Oder man setzt einen Schwimmer ein. Alternativ kann ein Mindestfüllstand durch eine Leitfähigkeitselektrode überprüft werden, die in das Gefäß mit der Chemikalie eintaucht. Die von der Meßeinrichtung auszugebende Warnmeldung wird vorzugsweise an den entfernten Ort übertragen, so daß von dort aus die entsprechenden Maßnahmen eingeleitet werden können. Generell ist in dem erfindungsgemäßen Verfahren vorzugsweise vorgesehen, daß man die Ergebnisse der Bestimmungen und/oder der Kontrollmessungen und/oder der Kalibrierungen und/oder die Statussignale kontinuierlich oder in vorgegebenen Zeitabständen und/oder auf Anforderung an einen entfernten Ort überträgt. Hierdurch ist Kontrollpersonal, das sich nicht am Ort der Prozeßlösung befinden muß, laufend über dessen aktuellen Tensidgehalt informiert. Je nach Ergebnis der Bestimmungen und der Kontrollmessungen können entweder automatisch über ein Prozeßleitsystem oder durch manuelles Eingreifen erforderliche Korrekturmaßnahmen getroffen werden.

Selbstverständlich setzt das erfindungsgemäße Verfahren voraus, daß man die entsprechende Einrichtung zur Verfügung stellt. Diese enthält eine Steuerung, vorzugsweise eine Rechnersteuerung, die zeit- und/oder ereignisabhängig den Meßverlauf steuert. Sie muß weiterhin die erforderlichen Reagenziengefäße, Rohrleitungen, Ventile, Dosier- und Meßeinrichtungen etc. zur Steuerung und Messung der Probenströme enthalten. Die Materialien sollen dem Verwendungszweck angepaßt sein, beispielsweise aus Edelstahl und/oder aus Kunststoff bestehen. Die Steuerelektronik der Meßeinrichtung sollte eine entsprechende input-output-Schnittstelle aufweisen, um mit einem entfernten Ort kommunizieren zu können.

Das erfindungsgemäße Verfahren ermöglicht es, zum einen den Tensidgehalt von Prozeßlösungen vor Ort zu überprüfen und ohne manuellen Eingriff vorgegebene Korrekturmaßnahmen einzuleiten. Hierdurch wird die Prozeßsicherheit erhöht und ein konstant zuverlässiges Prozeßergebnis erzielt. Abweichungen von den Sollwerten können frühzeitig erkannt und automatisch oder manuell korrigiert werden, bevor das Prozeßergebnis verschlechtert wird. Zum anderen werden die Meßdaten vorzugsweise an einen entfernten Ort übertragen, so daß Bedienungsoder Aufsichtspersonal auch dann laufend über den Zustand der Prozeßlösung informiert ist, wenn es sich nicht in dessen unmittelbarer Nähe befindet. Der Personalaufwand für Kontrolle und Steuerung der Prozeßlösung kann hierdurch beträchtlich reduziert werden. Durch die Dokumentation der im erfindungsgemäßen Verfahren erhobenen Daten wird den Anforderungen einer modernen Qualitätssicherung Rechnung getragen. Der Chemikalienverbrauch kann dokumentiert und optimiert werden.

## Patentansprüche

1. Verfahren zur automatischen Kontrolle und Steuerung des Gehalts einer wäßrigen Reinigerlösung an Tensiden, wobei man programmgesteuert
a) aus der wäßrigen Reinigerlösung eine Probe mit einem vorgegebenen Volumen zieht,
b) erwünschtenfalls die Probe von Feststoffen befreit,
c) erwünschtenfalls die Probe in einem vorgegebenen oder als Ergebnis einer Vorbestimmung ermittelten Verhältnis mit Wasser verdünnt,
d) den Gehalt an Tensiden durch selektive Adsorption, elektrochemisch, chromatographisch, durch Spaltung in flüchtige Verbindungen, Ausstrippen dieser flüchtigen Verbingungen und deren Detektion, oder durch Zugabe eines Reagenzes, das die Wechselwirkung der Probe mit elektromagnetischer Strahlung proportional zum Gehalt an Tensiden ändert, und Messung der Änderung dieser Wechselwirkung bestimmt,
e) das Ergebnis der Bestimmung auf einem Datenträger speichert und/oder als Basis für weitere Berechnungen heranzieht und/oder das Ergebnis der Bestimmung oder der weiteren Berechnungen an einen Ort überträgt, der sich nicht im optischen Kontakt mit der Reinigerlösung befindet, und bei Unterschreiten eines vorgegebenen Mindestwertes des Gehaltes an nichtionischen, anionischen oder kationischen Tensiden eine Einrichtung aktiviert, die eine oder mehrere Ergänzungskomponenten in die Reinigerlösung dosiert,
f) nach einem vorgegebenen Zeitintervall oder nach einer vorgegebenen Anzahl von Bestimmungen oder aufgrund einer externen Anforderung oder dann, wenn die Ergebnisse zweier aufeinanderfolgender Bestimmung um einen vorgegebenen Betrag differieren, durch Kontrollmessung einer oder mehrerer Standardlösungen die Funktionsfähigkeit der verwendeten Meßeinrichtung überprüft und
g) je nach Ergebnis der Überprüfung der verwendeten Meßeinrichtung mit der automatischen Bestimmung des Gehaltes an Tensiden fortfährt und/oder eine oder mehrere der folgenden Aktionen durchführt: Analyse festgestellter Abweichungen, Korrektur der Meßeinrichtung, Beenden der Bestimmungen des Gehaltes an Tensiden, Senden einer Statusmeldung oder eines Alarmsignals an ein übergeordnetes Prozeßleitsystem oder an eine Überwachungseinrichtung.

2. Verfahren nach Anspruch 1, **dadurch gekennzeichnet, daß** man je nach Ergebnis der Überprüfung der verwendeten Meßeinrichtung die zwischen der aktuellen und der vorhergehenden Kontrollmessung erfolgten Bestimmungen des Gehaltes an Tensiden mit einem Statuskennzeichen versieht, das die Zuverlässigkeit dieser Bestimmungen des Gehaltes an Tensiden kennzeichnet.

3. Verfahren nach Anspruch 1 oder 2, **dadurch gekennzeichnet, daß** man die Teilschritte a) bis e) nach einem vorgegebenen Zeitintervall wiederholt.

4. Verfahren nach Anspruch 1 oder 2, **dadurch gekennzeichnet, daß** man die Teilschritte a) bis e) nach um so kürzeren Zeitintervallen wiederholt, je stärker sich die Ergebnisse zweier aufeinanderfolgender Bestimmungen unterscheiden.

5. Verfahren nach Anspruch 1 oder 2, **dadurch gekennzeichnet, daß** man die Teilschritte a) bis e) aufgrund einer externen Anforderung ausführt.

6. Verfahren nach einem oder mehreren der Ansprüche 1 bis 5, **dadurch gekennzeichnet, daß** es sich bei den Tensiden um nichtionische Tenside handelt.

7. Verfahren nach Anspruch 6, **dadurch gekennzeichnet, daß** man im Teilschritt d) ein Reagenz zugibt, das die Wechselwirkung der Probe mit elektromagnetischer Strahlung proportional zum Gehalt an nichtionischen Tensiden ändert, und die Änderung dieser Wechselwirkung mißt.

8. Verfahren nach Anspruch 7, **dadurch gekennzeichnet, daß** es sich bei dem Reagenz um einen Komplex zweier Verbindungen A und B handelt, wobei die nichtionischen Tenside die Verbindung B aus dem Komplex mit der Verbindung A verdrängen und sich hierbei Farbe oder Fluoreszenzeigenschaften der Verbindung B ändern.

9. Verfahren nach Anspruch 7, **dadurch gekennzeichnet, daß** es sich bei dem Reagenz um eine Verbindung handelt, die mit anionischen Tensiden einen Komplex bildet, der andere Farb- oder Fluoreszenzeigenschaften aufweist als die freie Verbindung.

10. Verfahren nach Anspruch 9, **dadurch gekennzeichnet, daß** man im Teilschritt d) ein Reagenz zugibt, das mit nichtionischen Tensiden einen in ein nicht in jedem Verhältnis mit Wasser mischbares organisches Lösungsmittel extrahierbaren Komplex bildet, nach Zugabe des Reagenzes die Probe mit dem organischen Lösungsmittel extrahiert, eine Phasentrennung in eine wässrige und eine organische Phase durchführt und die Wechselwirkung der organischen Phase mit elektromagnetischer Strahlung mißt.

11. Verfahren nach Anspruch 10, **dadurch gekennzeichnet, daß** man nach der Phasentrennung die organische Phase von der wäßrigen Phase abtrennt.

12. Verfahren nach einem oder beiden der Ansprüche 10 und 11, **dadurch gekennzeichnet, daß** man als nicht in jedem Verhältnis mit Wasser mischbares organisches Lösungsmittel ein halogenhaltiges Lösungsmittel mit einer Dichte höher als Wasser verwendet.

13. Verfahren nach einem oder mehreren der Ansprüche 10 bis 12, **dadurch gekennzeichnet, daß** man als Reagenz eine Verbindung zugibt, die in der organischen Phase mit dem nichtionischen Tensid eine Farbreaktion eingeht, und daß man als Wechselwirkung der organischen Phase mit elektromagnetischer Strahlung die Lichtabsorption bei einer vorgegebenen Wellenlänge mißt.

14. Verfahren nach Anspruch 13, **dadurch gekennzeichnet, daß** man als Reagenz Tetrabromophenolphthaleinethylester verwendet und die wäßrige Reinigerlösung mit einem Puffersystem für den pH-Wert 7 versetzt.

15. Verfahren nach Anspruch 14, **dadurch gekennzeichnet, daß** man die Messung der Lichtabsorption im Teilschritt g) bei einer Wellenlänge von 610 nm durchführt.

16. Verfahren nach Anspruch 6, **dadurch gekennzeichnet, daß** man den Gehalt an nichtionischen Tensiden chromatographisch bestimmt.

17. Verfahren nach Anspruch 16, **dadurch gekennzeichnet, daß** man aus der Probe erwünschtenfalls Öle und Fette mit Hilfe eines Absorptionsmittels entfernt, gegebenenfalls vorhandene ionische Tenside mit einer Anionen- und/oder Kationenaustauschersäule entfernt und die Änderung des Brechungsindexes der von ionischen Tensiden befreiten, die Austauschersäule verlassenden Lösung mißt.

18. Verfahren nach Anspruch 6, **dadurch gekennzeichnet, daß** man die nichtionischen Tenside mit Halogenwasserstoff unter Bildung von flüchtigen Alkylhalogeniden spaltet, die flüchtigen Alkylhalogenide ausstrippt und detektiert.

19. Verfahren nach einem oder mehreren der Ansprüche 1 bis 5, **dadurch gekennzeichnet, daß** es sich bei den Tensiden um anionische Tenside handelt, deren Gehalt man im Teilschritt d) elektrochemisch bestimmt.

20. Verfahren nach Anspruch 19, **dadurch gekennzeichnet, daß** man den pH-Wert der Probe auf einen Bereich zwischen 3 und 4 einstellt, die Probe mit einem Titrationsreagenz in Gegenwart einer ionenempfindlichen Membranelektrode titriert und die Änderung des Elektrodenpotentials mißt.

21. Verfahren nach Anspruch 20, **dadurch gekennzeichnet, daß** man die Probe mit einem Alkohol mit 1 bis 3 C-Atomen versetzt.

22. Verfahren nach einem oder beiden der Ansprüche 20 und 21, **dadurch gekennzeichnet, daß** man als Titrationsreagenz 1,3-Didecyl-2-methylimidazoliumchlorid verwendet.

23. Verfahren nach einem oder mehreren der Ansprüche 1 bis 5, **dadurch gekennzeichnet, daß** es sich bei den Tensiden um kationische Tenside handelt, deren Gehalt man im Teilschritt d) elektrochemisch bestimmt.

24. Verfahren nach Anspruch 19 oder Anspruch 23, **dadurch gekennzeichnet, daß** man der Probe eine vorbestimmte Menge an Na-Dodecylsulfat zugibt, die Probe mit Hyamin (N-BenzyI-N,N-dimethyl-N-4(1.1.3.3.-tetramethyl-butyl)- mit phenoxy-ethoxyethylammoniumchlorid) titriert und den Titrationsendpunkt mit Hilfe einer ionensensitiven Elektrode bestimmt.

25. Verfahren nach einem oder mehreren der Ansprüche 1 bis 5, **dadurch gekennzeichnet, daß** man die Tenside an der Oberfläche eines Schwingquarzes adsorbiert und die Änderung der Schwingungsfrequenz des Schwingquarzes mißt.

26. Verfahren nach einem oder mehreren der Ansprüche 1 bis 5, **dadurch gekennzeichnet, daß** man die Tenside selektiv an der Oberfläche eines Lichtleiters adsorbiert und die Änderung der Lichtbrechung an der Lichtleiteroberfläche detektiert.

27. Verfahren nach einem oder mehreren der Ansprüche 1 bis 26, **dadurch gekennzeichnet, daß** man die Füllstände und/oder den Verbrauch der verwendeten Reagenzien automatisch überwacht und bei Unterschreiten eines vorgegebenen Mindestfüllstandes eine Warnmeldung ausgibt.

28. Verfahren nach einem oder mehreren der Ansprüche 1 bis 27, **dadurch gekennzeichnet, daß** man die Ergebnisse der Bestimmungen und/oder der Kontrollmessungen und/oder der Kalibrierungen und/oder die Statussignale kontinuierlich oder in vorgegebenen Zeitabständen und/oder auf Anforderung an einen von dem Ort der Bestimmung unterschiedlichen Ort überträgt.

## Claims

1. A method for automatically monitoring and controlling the surfactant content of an aqueous cleaning solution, **characterized in that**, under program control,
a) a sample of predetermined volume is taken from the aqueous cleaning solution,
b) if desired, the sample is freed from solids,
c) if desired, the sample is diluted with water in a predetermined ratio or in a ratio determined as the result of a preliminary measurement,
d) the surfactant content is determined by selective adsorption, electrochemically, chromatographically, by splitting into volatile compounds, stripping out these volatile compounds and detecting them or by adding a reagent which changes the interaction of the sample with electromagnetic radiation proportionally to the surfactant content and measuring the change **in that** interaction,
e) the result of the determination is stored on a data carrier and/or is used as the basis for further calculations and/or the result of the determination or the other calculations is transmitted to a location which is not in optical contact with the cleaning solution and, when the content of nonionic, anionic or cationic surfactants falls below a predetermined minimum value, a device is activated to add one or more replenishing components to the cleaning solution,
f) the measuring system used is checked for correct operation by control measurement of one or more standard solutions after a predetermined time interval or after a predetermined number of determinations or in response to an external request or when the results of two successive determinations differ by a predetermined amount and
g) depending on the result of the check on the measuring system used, automatic determination of the surfactant content is continued and/or one or more of the following actions is carried out: analysis of any deviations detected, correction of the measuring system, termination of determination of the surfactant content, transmission of a status signal or an alarm signal to a higher-level process control system or to a monitoring system.

2. A method as claimed in claim 1, **characterized in that**, depending on the result of the check on the measuring system used, the determinations of the surfactant content carried out between the present and the preceding control measurement are provided with a status sign which characterizes the reliability of those determinations of the surfactant content.

3. A method as claimed in claim 1 or 2, **characterized in that** steps a) to e) are repeated after a predetermined time interval.

4. A process as claimed in claim 1 or 2, **characterized in that** steps a) to e) are repeated after time intervals which are shorter, the greater the difference between the results of two successive determinations.

5. A process as claimed in claim 1 or 2, **characterized in that** steps a) to e) are carried out in response to an external request.

6. A method as claimed in one or more of claims 1 to 5, **characterized in that** the surfactants are nonionic surfactants.

7. A method as claimed in claim 6, **characterized in that**, in step d), a reagent is added which changes the interaction of the sample with electromagnetic radiation proportionally to the nonionic surfactant content and the change **in that** interaction is measured.

8. A method as claimed in claim 7, **characterized in that** the reagent is a complex of two compounds A and B, the nonionic surfactants displacing compound B from the complex containing compound A and the colour or fluorescence properties of compound B changing in the process.

9. A method as claimed in claim 7, **characterized in that** the reagent is a compound which, with the anionic surfactants, forms a complex with different colour or fluorescence properties in relation to the free compound.

10. A method as claimed in claim 9, **characterized in that**, in step d), a reagent is added which, with nonionic surfactants, forms a complex extractable into an organic solvent which is not miscible with water in any ratio, the sample is extracted with the organic solvent after addition of the reagent, phase separation into an aqueous phase and an organic phase is carried out and the interaction of the organic phase with electromagnetic radiation is measured.

11. A method as claimed in claim 10, **characterized in that**, after the phase separation, the organic phase is removed from the aqueous phase.

12. A method as claimed in one or both of claims 10 and 11, **characterized in that** a halogen-containing solvent with a density higher than water is used as the organic solvent which is not miscible with water in any ratio.

13. A method as claimed in one or more of claims 10 to 12, **characterized in that** the reagent added is a compound which enters into a colour reaction with the nonionic surfactant in the organic phase and **in that** the absorption of light at a predetermined wavelength is measured as the interaction of the organic phase with electromagnetic radiation.

14. A method as claimed in claim 13, **characterized in that** tetrabromophenolphthalein ethyl ester is used as the reagent and a buffer system for pH 7 is added to the aqueous cleaning solution.

15. A method as claimed in claim 14, **characterized in that** the light absorption measurement in step g) is carried out at a wavelength of 610 nm.

16. A process as claimed in claim 6, **characterized in that** the nonionic surfactant content is chromatographically determined.

17. A method as claimed in claim 16, **characterized in that**, if desired, oils and fats are removed from the sample with an absorbent, any ionic surfactants present are removed in an anion and/or cation exchange column and the change in the refractive index of the solution freed from ionic surfactants leaving the exchange column is measured.

18. A method as claimed in claim 6, **characterized in that** the nonionic surfactants are split with hydrogen halide to form volatile alkyl halides, the volatile alkyl halides are stripped out and detected.

19. A method as claimed in one or more of claims 1 to 5, **characterized in that** the surfactants are anionic surfactants of which the content is electrochemically determined in step d).

20. A method as claimed in claim 19, **characterized in that** the pH of the sample is adjusted to a value of 3 to 4, the sample is titrated with a titration reagent in the presence of an ion-sensitive membrane electrode and the change in the electrode potential is measured.

21. A method as claimed in claim 20, **characterized in that** a C₁₋₃ alcohol is added to the sample.

22. A method as claimed in one or both of claims 20 and 21, **characterized in that** 1,3-didecyl-2-methyl imidazolium chloride is used as the titration reagent.

23. A method as claimed in one or more of claims 1 to 5, **characterized in that** the surfactants are cationic surfactants of which the content is electrochemically determined in step d).

24. A method as claimed in claim 19 or claim 23, **characterized in that** a predetermined quantity of sodium dodecyl sulfate is added to the sample, the sample is titrated with Hyamin (N-benzyl-N,N-dimethyl-N-4-(1,1,3.3-tetramethylbutyl)-phenoxyethoxyethyl ammonium chloride) and the titration end point is determined with an ion-sensitive electrode.

25. A method as claimed in one or more of claims 1 to 5, **characterized in that** the surfactants are adsorbed onto the surface of an oscillation crystal and the change in the oscillation frequency of the oscillation crystal is measured.

26. A method as claimed in one or more of claims 1 to 5, **characterized in that** the surfactants are selectively adsorbed onto the surface of an optical fibre and the change in the refraction of light at the surface of the optical fiber is detected.

27. A method as claimed in one or more of claims 1 to 26, **characterized in that** the filling levels and/or the consumption of the reagents used are/is automatically monitored and, if the filling levels falls below a predetermined minimum, a warning signal is released.

28. A method as claimed in one or more of claims 1 to 27, **characterized in that** the results of the determinations and/or the control measurements and/or the calibrations and/or the status signals are transmitted continuously or at predetermined time intervals and/or on request to a location different from the point of determination.

## Revendications

1. Procédé pour contrôler et réguler automatiquement la teneur d'une solution aqueuse de produit de nettoyage, en agents tensioactifs dans lequel d'une manière programmée :
a) on prélève d'une solution d'agent de nettoyage aqueuse un échantillon ayant un volume indiqué à l'avance,
b) on débarrasse si désiré l'échantillon des matières solides,
c) on dilue si désiré l'échantillon avec de l'eau dans un rapport prédéterminé ou déterminé en tant que résultat d'une prédétermination,
d) on détermine la teneur en agent tensioactif par adsorption sélective, par voie électrochimique, par voie chromatrographique, par coupure en composés volatils, extraction de ces composés volatils et leur détection, ou par addition d'un réactif qui modifie d'une manière proportionnelle à la teneur en agents tensioactifs, l'action réciproque des échantillons avec un rayonnement électromagnétique et mesure de la modification de cette action réciproque,
e) on enregistre le résultat de la détermination sur un support de données et/ou on le prend comme base pour des déterminations par calcul ultérieures, et/ou on transfère le résultat de la détermination ou des déterminations par le calcul ultérieurs à un endroit qui ne se trouve pas en contact optique avec la solution de l'agent de nettoyage, et lors d'un sous-dépassement d'une valeur minimale pré-établie de la teneur en agents tensioactifs non ioniques, anioniques ou cationiques, on active une installation qui admet par doses un ou plusieurs composants de complément dans la solution d'agent de nettoyage,
f) après un intervalle de temps pré-établi ou après un nombre pré-établi de déterminations ou en raison d'une contrainte extérieure ou donc lorsque les résultats de deux déterminations consécutives différentes d'un montant pré-établi, on vérifie par mesure de contrôle d'une ou plusieurs solutions standard, la capacité de fonctionnement du dispositif de mesure utilisé, et
g) selon le résultat de la vérification du dispositif de mesure utilisé avec la détermination automatique de la teneur en agents tensioactifs on poursuit et/ou on effectue une ou plusieurs des actions suivantes : analyse des déviations constatées, correction du dispositif de mesure, achèvement des déterminations de la teneur en agents tensioactifs, envoi d'un message d'état ou d'un signal d'alarme sur un système de guidage du processus disposé par au-dessus ou sur un dispositif de surveillance.

2. Procédé selon la revendication 1,
**caractérisé en ce qu'**
on équipe selon le résultat du contrôle du dispositif de mesure utilisé, les déterminations effectuées entre la mesure de contrôle actuelle et la mesure précédente de la teneur en agents tensioactifs d'une caractéristique de statut qui caractérise la fiabilité de ces déterminations de la teneur en agents tensioactifs.

3. Procédé selon la revendication 1 ou la revendication 2,
**caractérisé en ce qu'**
on répète les étapes partielles a) à e) après un intervalle de temps pré-établi.

4. Procédé selon la revendication 1 ou la revendication 2,
**caractérisé en ce qu'**
on répète les étapes partielles a) à e) après des intervalles de temps d'autant plus courts que les résultats de deux déterminations consécutives se différencient plus fortement.

5. Procédé selon la revendication 1 ou la revendication 2,
**caractérisé en ce qu'**
on effectue les étapes partielles a) à e) en raison d'une contrainte externe.

6. Procédé selon l'une ou plusieurs des revendications 1 à 5,
**caractérisé en ce qu'**
il s'agit en ce qui concerne les agents tensioactifs d'agents tensioactifs non ioniques.

7. Procédé selon la revendication 6,
**caractérisé en ce qu'**
on ajoute dans l'étape partielle d) un réactif qui modifie d'une manière proportionnelle à la teneur en agents tensioactifs non ioniques l'interaction de l'échantillon avec le rayonnement électromagnétique et qui mesure le changement de cette interaction.

8. Procédé selon la revendication 7,
**caractérisé en ce qu'**
il s'agit en ce qui concerne le réactif d'un complexe de deux composés A et B pour lequel les agents tensioactifs non-ioniques déplacent le composé B du complexe avec le composé A et modifient de cette façon la couleur ou les propriétés de fluorescence du composé B.

9. Procédé selon la revendication 7,
**caractérisé en ce qu'**
il s'agit en ce qui concerne le réactif d'un composé qui forme avec des agents tensioactifs anioniques un complexe qui possède d'autres propriétés de couleur ou de fluorescence que le composé libre.

10. Procédé selon la revendication 9,
**caractérisé en ce qu'**
on ajoute dans l'étape partielle d) un réactif qui forme avec des agents tensioactifs non-ioniques un complexe extractible avec un solvant organique non miscible à l'eau dans n'importe quel rapport, extrait après addition du réactif l'échantillon avec le solvant organique, on effectue une séparation de phase en une phase aqueuse et une phase organique et on mesure l'interaction des phases organiques avec un rayonnement électromagnétique.

11. Procédé selon la revendication 10,
**caractérisé en ce qu'**
on sépare après la séparation de phase, la phase organique de la phase aqueuse.

12. Procédé selon l'une ou les deux des revendications 10 et 11,
**caractérisé en ce qu'**
on utilise comme solvant organique qui n'est pas miscible à l'eau dans n'importe quel rapport, un solvant halogéné ayant une densité supérieure à l'eau.

13. Procédé selon l'une ou plusieurs des revendications 10 à 12,
**caractérisé en ce qu'**
on verse comme réactif un composé qui provoque dans la phase organique avec l'agent tensioactif non ionique, une réaction colorée et on mesure l'absorption de lumière à une longueur d'onde pré-établie en tant qu'interaction de la phase organique avec un rayonnement électromagnétique.

14. Procédé selon la revendication 13,
**caractérisé en ce qu'**
on utilise comme réactif l'ester éthylique de la tétrabromophénolphtaléine et on mélange la solution d'agent de nettoyage aqueuse avec un système de tampon pour la valeur de pH 7.

15. Procédé selon la revendication 14,
**caractérisé en ce qu'**
on effectue la mesure de l'absorption lumineuse à l'étape partielle g) à une longueur d'ondes de 610 nm.

16. Procédé selon la revendication 6,
**caractérisé en ce qu'**
on détermine la teneur en agents tensioactifs non ioniques par chromatographie.

17. Procédé selon la revendication 16,
**caractérisé en ce qu'**
on élimine de l'échantillon si désiré les huiles et les graisses à l'aide d'un agent d'absorption on élimine les agents tensioactifs ioniques éventuellement présents avec une colonne d'échangeur d'anions et/ou de cations et on mesure la modification de l'indice de réfraction de la solution débarrassée des agents tensioactifs ioniques, qui quitte la colonne d'échangeur.

18. Procédé selon la revendication 6,
**caractérisé en ce qu'**
on coupe les agents tensioactifs non ioniques avec un acide halo hydrique, avec formation d'halogénures d'alkyle volatils, on épuise les halogénures d'alkyle volatils et on les détecte.

19. Procédé selon l'une ou plusieurs des revendications 1 à 5,
**caractérisé en ce qu'**
il s'agit en ce qui concerne les agents tensioactifs d'agents tensioactifs anioniques dont on détermine la teneur à l'étape partielle d) par voie électrochimique.

20. Procédé selon la revendication 19,
**caractérisé en ce qu'**
on ajuste la valeur du pH de l'échantillon à une zone comprise entre 3 et 4, on titre l'échantillon avec un réactif de titration en présence d'une électrode à membrane sensible aux ions et on mesure la modification du potentiel de l'électrode.

21. Procédé selon la revendication 20,
**caractérisé en ce qu'**
on additionne l'échantillon d'un alcool ayant de 1 à 3 atomes de carbone.

22. Procédé selon l'une ou selon les deux revendications 20 et 21,
**caractérisé en ce qu'**
on utilise comme réactif de titration le chlorure de 1,3-didecyl 2-méthyl imidazolium.

23. Procédé selon l'une ou plusieurs des revendications 1 à 5,
**caractérisé en ce qu'**
il s'agit en ce qui concerne les agents tensioactifs d'agents tensioactifs cationiques dont on détermine la teneur à l'étape partielle d) par voie électrochimique.

24. Procédé selon la revendication 19 ou la revendication 23,
**caractérisé en ce qu'**
on ajoute à l'échantillon une quantité prédéterminée de dodécylulfate de sodium, on titre l'échantillon avec de la Hyamine (chlorure de N-benzyl N,N-diméthyl N-4-(1.1.3.3.-tétraméthylbutyl)-phénoxyéthylammonium) et on détermine le point final de titration à l'aide d'une électrode sensible aux ions.

25. Procédé selon l'une ou plusieurs des revendications 1 à 5,
**caractérisé en ce qu'**
on adsorbe les agents tensioactifs à la surface d'un quartz oscillant et on mesure la modification de fréquence oscillatoire du quartz oscillant.

26. Procédé selon l'une ou plusieurs des revendications 1 à 5,
**caractérisé en ce qu'**
on adsorbe sélectivement les agents tensioactifs à la surface d'un conducteur de lumière et on détecte la modification de la réfraction lumineuse à la surface du conducteur de lumière.

27. Procédé selon l'une ou plusieurs des revendications 1 à 26,
**caractérisé en ce qu'**
on contrôle automatiquement les niveaux et/ou la consommation des réactifs utilisés et au cas où un niveau minimal pré-établi est sous-dépassé, on émet un signal d'avertissement.

28. Procédé selon l'une ou plusieurs des revendications 1 à 27,
**caractérisé en ce qu'**
on transfère les résultats des déterminations et/ou des mesures de contrôle et/ou des calibrages et/ou des signaux de statut en continu ou dans des intervalles de temps pré-établis et/ou sur demande, à un endroit différent de l'endroit de la détermination.
